# EUROPÄISCHE PATENTSCHRIFT

(11) **EP 0 523 005 B1**
(45) Veröffentlichungstag und Bekanntmachung des Hinweises auf die Patenterteilung: **08.03.1995**
(21) Anmeldenummer: 92810505.5
(22) Anmeldetag: 02.07.1992
(51) Int. Cl.: C09B 33/147, C09B 33/153, C09B 43/32, C09B 43/38, C08K 5/23

(54) **Disazoverbindungen mit Cycloalkylester- oder Cycloalkylamidresten**
Disazodyes with cycloalkylester or cycloalkylamide rests
Colorants disazoiques comportant des restes de type cycloalkylester ou cycloalkylamide

(30) Priorität: 11.07.1991 CH 2064/91
(43) Veröffentlichungstag der Anmeldung: 13.01.1993
(73) Patentinhaber: CIBA-GEIGY AG, 4002 Basel (CH)
(72) Erfinder: Hari, Stefan, Dr., CH-4153 Reinach (CH)

(56) Entgegenhaltungen:
- EP-A- 0 040 173
- EP-A- 0 041 605
- EP-A- 0 095 442
- EP-A- 0 358 604
- DE-A- 1 644 111
- DE-A- 1 768 892
- DE-A- 2 032 601
- US-A- 4 070 353

## Beschreibung

Die vorliegende Erfindung betrifft neue Disazoverbindungen enthaltend Cycloalkylamidreste und ihre Verwendung zum Einfärben von hochmolekularem organischem Material, insbesondere von Polyolefinen.

Azopigmente mit Esterresten sind schon lange bekannt. Rote Disazopigmente sind z.B. in den US-Patenten Nr. 3137688 und Nr. 4689403 beschrieben, während gelbe Disazoverbindungen z.B. in den US-Patenten Nr. 4003886 und Nr. 4065448 offenbart werden. Ein Hauptmerkmal der dort aufgeführten Verbindungen besteht darin, dass sie mindestens vier Alkylesterreste aufweisen, wobei der Alkylrest bis max. 4 C-Atome enthält. Disazoverbindungen enthaltend langkettige Alkylester- oder Alkylamidreste sind in US-Patent 4946948 beschrieben. Auch Monoazopigmente mit einem Cycloalkylesterrest sind bekannt, wie z.B. gemäss EP-A 41605. Disazopigmente mit Alkylamidgruppen sind z.B. im US-Patent Nr. 3562249 beschrieben.

Derartige Produkte besitzen zwar im allgemeinen gute Pigmenteigenschaften, sie genügen jedoch je nach Applikation nicht immer den heutigen Anforderungen der Technik.

Es ist nun gefunden worden, dass sich Disazopigmente mit mindestens zwei Cycloalkylamidresten überraschenderweise sehr gut zum Farben von hochmolekularen organischen Materialien, insbesondere von Polyolefinen, eignen, wobei sie eine verbesserte Dispergierbarkeit, eine geringere Ausblühtendenz und ausgezeichnete Pigmenteigenschaften aufweisen. Die neuen Disazopigmente mit 2 oder mehr Cycloalkylresten sind überraschenderweise erheblich Licht-, Wetter- und Säurebeständiger als die Monoazopigmente mit nur einem Cycloalkylrest.

Die vorliegende Erfindung betrifft demnach Verbindungen der Formel I 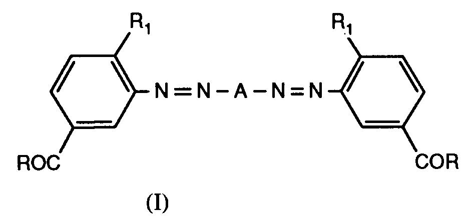
worin A für einen Rest der Formel II 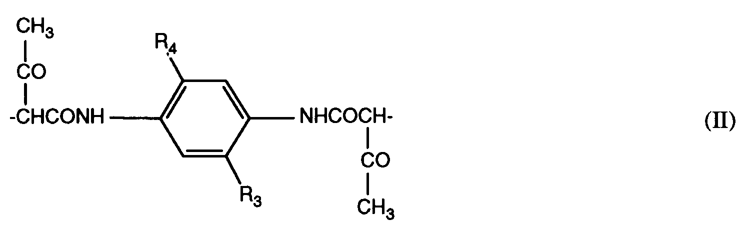
steht, worin R für einen Rest der Formel -NHR₂ steht, und
R₁ -H, -Cl, -CH₃, -OCH₃, -OC₂H₅, -COOCH₃, -COOC₂H₅ oder -OC₆H₅,
R₂ C₅-C₆-Cycloalkyl, und R₃ und R₄ unabhängig voneinander -H, -Cl, -CH₃, -OCH₃ oder -OC₂H₅ bedeuten.

Die Verbindungen der Formel I können nach an und für sich bekannten Verfahren hergestellt werden, z.B.:
a) durch Kondensation von 1 Mol eines Carbonsäurehalogenides der Formel 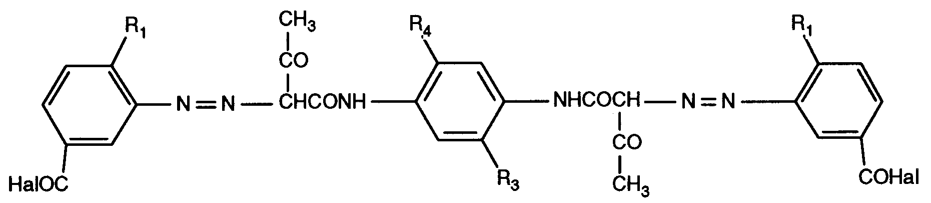 mit 2 Mol eines C₅-C₁₂-Cycloalkyl-Amins z.B. in Analogie zu der in US-Patent Nr. 4065448 beschriebenen Methode, oder
b) durch Diazotierung eines Amins der Formel 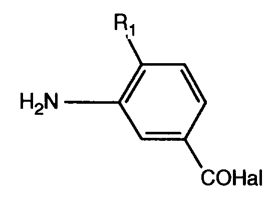 und anschliessende Kupplung der erhaltenen Diazokomponente mit einer Kupplungskomponente der Formel 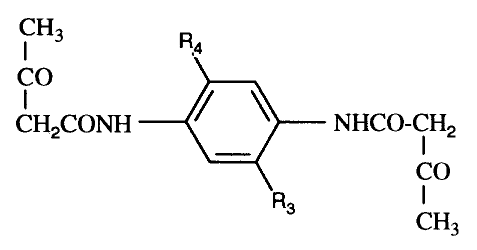 z.B. gemäss US-Patent Nr. 4003886, wobei die Substituenten R₁ bis R₄ und Hal die oben angegebene Bedeutung haben.

Die obigen Kupplungskomponenten und Carbonsäurehalogenide sind bekannte Zwischenprodukte.

Ein bevorzugtes Herstellungsverfahren ist das Kondensationsverfahren gemäss obigem Schema a). Die Kondensation wird zweckmässig in Gegenwart eines organischen inerten Lösungsmittels bei Normal- oder Ueberdruck, mit oder ohne Katalysator, durchgeführt. Geeignete Lösungsmittel sind z.B. Toluol, Chlorbenzol, Dichlorbenzole, wie o-Dichlorbenzol, ferner Trichlorbenzole, Nitrobenzol oder Gemische aromatischer und/oder aliphatischer Lösungsmittel, wie ®Shellsole.

Die Verbindungen der Formel I können aber auch über eine Amidierungsreaktion hergestellt werden, indem man eine Verbindung der Formel 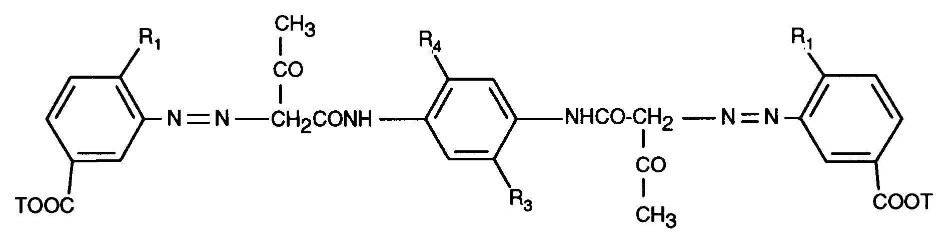
worin T C₁-C₃-Alkyl bedeutet, und R₁, R₃ und R₄ die oben angegebene Bedeutung haben, mit einem Amin der Formel R₂NH₂ nach bekannten Verfahren zu Verbindungen der Formel I amidiert. T bedeutet Methyl, Ethyl, Propyl oder Isopropyl. Als Beispiele für die obenerwähnten Alkohole und Amine seien Cyclopentanol, Cyclohexanol, Cyclopentylamin und Cyclohexylamin erwähnt:
Die Umsetzung erfolgt zweckmässig direkt in einem Ueberschuss des entsprechenden Amins oder in Gegenwart eines organischen Lösungsmittels, wie z.B. Toluol, Xylole, Dichlorbenzole, Nitrobenzol, Chlornaphthalin, Anisol, ®Dowtherm, oder Ketone, wie Cyclohexanon, bei erhöhter Temperatur, z.B. im Siedebereich des verwendeten Lösungmittels, unter Normaldruck oder unter Druck, mit oder ohne Katalysatoren. Werden Katalysatoren eingesetzt, so sind z.B. Schwefelsäure, p-Toluolsulfonsäure, Methylsulfonsäure, LiH, LiNH₂, NaOCH₃, KO-tert-Butylat, Tetraalkyltitanate, Dibutylzinnoxid oder seltene Erden geeignet.

Die Isolierung der erhaltenen Verbindungen der Formel I erfolgt wie üblich z.B. durch Filtration. Das Nutschgut wird mit einem der bereits oben angegebenen Lösungsmittel und dann zweckmässig noch mit Wasser gewaschen. Sie werden im allgemeinen in guter Ausbeute und Reinheit erhalten und können ohne weitere Reinigung in feinverteilter Form z.B. zum Färben von hochmolekularem organischem Material verwendet werden.

Sofern ihre Reinheit und/oder Partikel-Form und -Grösse zur Anwendung als Pigmente noch nicht genügend bzw. optimal sind, können die erfindungsgemässen Verbindungen weiter konditioniert werden. Unter Konditionierung versteht man die Herstellung einer feinen, für die Applikation optimalen Partikel-Form und -Grösse, beispielsweise durch Trockenmahlung mit oder ohne Salz, durch Lösungsmittel- oder wässrige Mahlung oder durch Salzknetung oder durch eine nachträgliche thermische Lösungsmittelbehandlung.

Thermische Lösungsmittelbehandlungen können z.B. in organischen Lösungsmitteln, vorzugsweise mit solchen, die über 100°C sieden, durchgeführt werden.

Als besonders geeignet hierfür erweisen sich durch Halogenatome, Alkyl- oder Nitrogruppen substituierte Benzole, wie Toluol, Chlorbenzol, o-Dichlorbenzol, Xylole oder Nitrobenzol, Alkohole, wie Isopropanol oder Isobutanol, ferner Ketone, wie Cyclohexanon, Ether, wie Ethylenglykolmonomethyl- oder -monoethylether, Amide, wie Dimethylformamid oder N-Methyl-pyrrolidon, sowie Dimethylsulfoxyd, Sulfolan oder Wasser allein, gegebenenfalls unter Druck. Man kann die Nachbehandlung auch in Wasser in Gegenwart von organischen Lösungsmitteln und/oder mit Zusatz von oberflächenaktiven Substanzen oder aliphatischen Aminen, oder in flüssigem Ammoniak, durchführen.

Je nach Konditionierverfahren und/oder Applikationszweck kann es von Vorteil sein, den erfindungsgemässen Verbindungen der Formel I gewisse Mengen an texturverbessernden Mitteln vor oder nach dem Konditionierprozess zuzufügen. Als solche kommen insbesondere Fettsäuren mit mindestens 18 C-Atomen, beispielsweise Stearin- oder Behensäure oder deren Amide oder Metallsalze, insbesondere Mg-Salze, sowie Weichmacher, Wachse, Harzsäuren, wie Abietinsäure, Kolophoniumseife, Alkylphenole oder aliphatische Alkohole, wie Stearylalkohol, oder vicinale Diole, wie Dodecandiol-1,2, ferner modifizierte Kolophoniummaleinatharze oder Fumarsäurekolophoniumharze, in Betracht. Die texturverbessernden Mittel werden vorzugsweise in Mengen von 0,1-30 Gew.%, insbesondere 2-15 Gew.%, bezogen auf das Endprodukt, zugesetzt.

Hochmolekulares organisches Material kann natürlicher oder künstlicher Herkunft sein. Es kann sich z.B. um Naturharze oder trocknende Oele, Kautschuk oder Casein oder um abgewandelte Naturstoffe, wie Chlorkautschuk, ölmodifizierte Alkydharze, Viscose, um Celluloseether oder -ester, wie Celluloseacetat, Cellulosepropionat, Celluloseacetobutyrat oder Nitrocellulose handeln, insbesondere aber um vollsynthetische organische Polymere (Duroplaste und Thermoplaste), wie sie durch Polymerisation, Polykondensation oder Polyaddition erhalten werden. Aus der Klasse der Polymerisationsharze seien in erster Linie genannt: Polyolefine, wie Polyethylen, Polypropylen oder Polyisobutylen, ferner substituierte Polyolefine, wie Polymerisate aus Vinylchlorid, Vinylacetat, Styrol, Acrylnitril, Acrylsäure- und/oder Methacrylsäureestern oder Butadien, sowie Kopolymerisate der erwähnten Monomeren, insbesondere ABS, EVA oder Acryl-styrol-acrylonitril (ASA).

Aus der Reihe der Polyadditionsharze und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste, die als Lackharze verwendeten Polyester, und zwar sowohl gesättigte, wie z.B. Alkydharze, als auch ungesättigte, wie beispielsweise Maleinatharze, ferner die linearen Polyester, Polycarbonate, Polyurethane und Polyamide oder Silikone genannt.

Die erwähnten hochmolekularen Verbindungen können einzeln oder in Gemischen, als plastische Masse oder Schmelzen, die gegebenenfalls zu Fasern versponnen werden können, vorliegen.

Sie können auch im polymerisierten Zustand in gelöster Form als Filmbildner oder Bindemittel für Lacke oder Druckfarben vorliegen, wie z.B. Leinölfirnis, Nitrocellulose, Alkydharze, Melaminharze und Harnstoff-Formaldehydharze oder Acrylharze.

Die Pigmentierung der hochmolekularen, organischen Substanzen mit den definitionsgemässen Verbindungen der Formel I erfolgt beispielsweise derart, dass man eine solche Verbindung gegebenenfalls in Form von Masterbatches, diesen Substraten unter Verwendung von Walzwerken, Misch- oder Mahlapparaten zumischt. Das pigmentierte Material wird hierauf nach an sich bekannten Verfahren wie Kalandrieren, Pressen, Strangpressen, Streichen, Verspinnen, Giessen oder durch Spritzguss in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung des Pigmentes in die Polymeren eingearbeitet werden. Es ist ferner möglich, zwecks Erzielung verschiedener Farbtöne den hochmolekularen organischen Stoffen neben den erfindungsgemässen Verbindungen noch Füllstoffe bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die Verbindungen der Formel I gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Das hochmolekulare organische Material enthält vorzugsweise 0,01-20 Gew.% einer erfindungsgemässen Verbindung der Formel I, beispielsweise in Kunststoffen, Fasern, Lacken und Drucken. Die erfindungsgemässen Verbindungen zeichnen sich durch gute Dispergierbarkeit, Ueberlackier-, Migrations-, Hitze-, Licht- und Wetterbeständigkeit, gute Farbstärke sowie durch einen guten Glanz der damit erhaltenen Ausfärbungen, aus.

Die Verbindungen der Formel I werden aber bevorzugt zum Einfärben von Polyolefinen eingesetzt.

Als Beispiele für Polyolefine seien Polyethylen hoher und niederer Dichte (HD-PE, LD-PE und LLD-PE), Polypropylen und Polyisobutylen, sowie Copolymere von Polyolefinen mit z.B. Polyethern, Polyetherketonen oder Polyurethanen erwähnt.

Die Einfärbung erfolgt nach üblichen Verfahren, beispielsweise durch Mischen einer Verbindung der Formel I mit dem Polyolefingranulat oder -pulver und Extrudieren der Mischung zu Fasern, Folien oder Granulaten. Letztere können dann im Spritzgussverfahren zu Gegenständen verformt werden.

Die erhaltenen Ausfärbungen weisen hohe Reinheit und hohe Sättigung auf und zeichnen sich durch eine ausgezeichnete Dispergierbarkeit, durch gute allgemeine Beständigkeit, insbesondere gegen Hitze und Licht, sowie durch ihre geringe Ausblühtendenz, aus. Ein besonderer Vorteil von mit den erfindungsgemässen Verbindungen der Formel I gefärbten Polyethylengegenständen besteht darin, dass sie insbesondere im Falle von HD-PE, keine erhöhte Neigung zu Verzugs- und Deformationserscheinungen zeigen. Sie zeigen zudem eine hohe Säurebeständigkeit.

Die mit den erfindungsgemässen Verbindungen der Formel I in der Masse eingefärbten Kunststoff-Fasern, wie z.B. PP-Fasern, besitzen ausgezeichnete textile Eigenschaften, wie z.B. Licht- und Nassbeständigkeiten gegenüber Wasch- und Lösungsmitteln.

Die nachfolgenden Beispiele dienen zur Erläuterung der Erfindung.

Beispiel 1: 3,65 g des Disazodicarbonsäuredichlorides der Formel 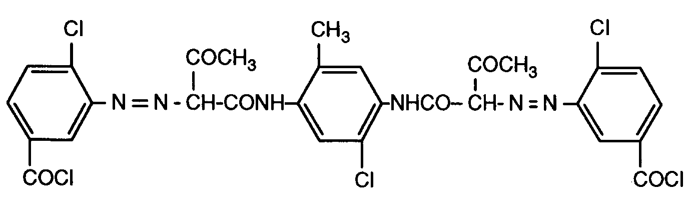
und 3,1 g Cyclohexylamin werden in 150 ml o-Dichlorbenzol auf 132°C erhitzt und während 2 Stunden bei dieser Temperatur kräftig gerührt. Die gelbe Suspension wird auf 80°C abgekühlt. Man nutscht das Produkt bei dieser Temperatur ab, wäscht es mit o-Dichlorbenzol und heissem Methanol und trocknet es im Vakuum bei 60°C. Man erhält 4,1 g (96,2 % der Theorie) eines gelben Pulvers der Formel

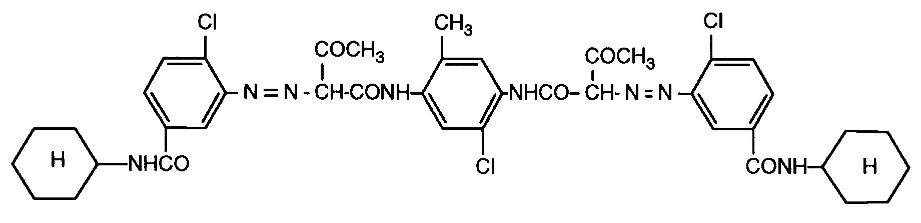

| Analyse: | C | H | Cl | N |
|---|---|---|---|---|
| Ber.: | 57,78 % | 5,32 % | 12,48 % | 13,15 % |
| Gef.: | 57,64 % | 5,32 % | 12,61 % | 13,17 % |

Das Produkt dieses Beispiels färbt Polyvinylchlorid mit hoher Migrationsbeständigkeit in farbstarken grüngelben Tönen von ausgezeichneter Licht- und Wetterbeständigkeit.

Beispiele 2-4: In nachstehender Tabelle sind weitere Verbindungen beschrieben, die nach dem Verfahren des Beispiels 1 hergestellt werden können, indem man die Diazoverbindung aus 3-Amino-4-chlor-benzoesäure auf das Bisacetessigsäurearylid des in der Kolonne I aufgeführten Diamins kuppelt, die so erhaltene Disazofarbstoffdicarbonsäure in ihr entsprechendes Dicarbonsäuredichlorid überführt und dann dieses mit dem Cycloamin der Kolonne II kondensiert. Kolonne III gibt den Farbton der mit diesen Pigmenten gefärbten PVC-Folie an.

| Bsp. | I | II | III |
|---|---|---|---|
| 2 | 2,5-Dimethyl-p-phenylendiamin | Cyclohexylamin | gelb |
| 3 | 2,5-Dichlor-p-phenylendiamin | Cyclohexylamin | grüngelb |
| 4 | 2,5-Dimethyl-p-phenylendiamin | Cyclopentylamin | gelb |

Beispiel 5: 2,6 g 3-Amino-4-methyl-benzoesäure-cyclohexylamid und 1,5 g 2,5-Dimethyl-1,4-diaceto-acetylaminobenzol werden in 200 ml Essigsäure auf 60°C erhitzt. Die entstandene klare gelbe Lösung wird auf 57°C abgekühlt und bei dieser Temperatur durch schnelles Zutropfen mit 2,86 ml einer 4N-Natriumnitritlösung versetzt. Es fällt ein dicker oranger Niederschlag aus. Die orange Suspension wird 3 Stunden bei 65°C gerührt und abfiltriert. Das Nutschgut wird mit 200 ml 96%-igem Ethylalkohol gewaschen und im Vakuum bei 60°C getrocknet. Man erhält 2,6 g (91 % der Theorie) eines ockergelben Pulvers der Formel

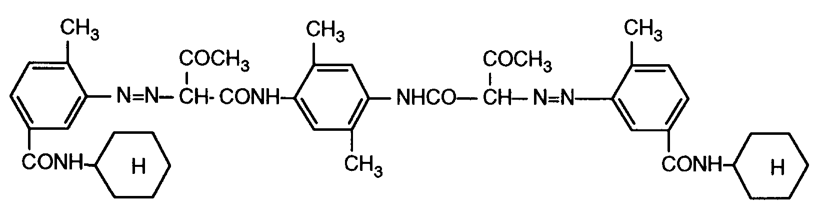

| | | | | |
|---|---|---|---|---|
| Analyse: | Ber. (in %): | C 66,82 | H 6,88 | N 14,17 |
| | Gef. (in %): | C 67,20 | H 7,21 | N 14,15 |

Dieses Produkt färbt Polyethylen, Polyamid und Polyvinylchlorid in farbstarken Tönen. Die Hitzebeständigkeiten dieser Ausfärbungen sind ausgezeichnet.

Beispiele 6-9: In nachstehender Tabelle sind weitere Verbindungen beschrieben, die durch Kupplung im Molverhältnis 2:1 der diazotierten Verbindung einer Base gemäss Kolonne I mit einem Bisacetessigsäurearylid eines Diamines der Kolonne II erhalten werden. Kolonne III gibt den Farbton der mit diesen Pigmenten gefärbten PVC-Folie an.

| Bsp. | I | II | III |
|---|---|---|---|
| 6 | 4-Amino-benzoesäure-cyclohexylamid | 2-Chlor-5-methyl-p-phenylendiamin | grüngelb |
| 7 | 4-Amino-benzoesäure-cyclohexylamid | 2,5-Dimethyl-p-phenylendiamin | gelb |
| 8 | 3-Amino-4-methoxy-benzoesäure-cyclohexylamid | 2-Chlor-5-methyl-p-phenylendiamin | gelb |
| 9 | 3-Amino-4-chlor-benzoesäure-cyclohexylamid | 3,3'-Dimethylbenzidin | gelb |

Beispiel 10: Eine Mischung von 1,0 g des nach Beispiel 1 erhaltenen Disazokondensationpigmentes, 1,0 g Antioxidans ®IRGANOX 1010 (CIBA-GEIGY AG) und 1000 g Polyethylen HD Granulat (®VESTOLEN A60-16, HUELS) wird während 15 Minuten in einer 3 l-Glasflasche auf einer Rollbank vorgemischt. Danach wird die Mischung zweimal durch einen Einwellenextruder extrudiert. Das so erhaltene Granulat wird dann auf einer Spritzgussmaschine (®Allround Aarburg 200) bei 250°C mit einer Verweilzeit von 5 Minuten zu Platten verspritzt. Die so erhaltenen Platten weisen gleichmässig farbstarke grüngelbe Färbungen hoher Reinheit und ausgezeichneter Lichtbeständigkeit auf.

Beispiel 11: 40 mg des gemäss Beispiel 1 erhaltenen Disazokondensationspigmentes werden mit 7,3 ml Dioctylphthalat und 13,3 g eines stabilisierten Polyvinylchlorids vom Typ ®LONZA E-722 in einem Becherglas mit einem Glasstab gut vermischt. Das erhaltene Gemisch wird dann auf einem Walzenstuhl während 5 Minuten bei 160°C zu einer dünnen Folie verarbeitet. Die so erzeugte PVC-Folie weist eine sehr farbstarke, grüngelbe Färbung hoher Reinheit und sehr guter Lichtbeständigkeit auf. Die Dispergierbarkeit des Pigmentes ist ausgezeichnet.

Beispiel 12: 1000 g Polypropylengranulat (®DAPLEN PT-55, Chemie LINZ) und 1,0 g des nach Beispiel 1 erhaltenen Disazokondensationspigmentes werden in einer 3 l-Flasche während 15 Minuten auf dem Rollbock gemischt. Danach wird die Mischung zweimal durch einen Einwellenextruder extrudiert und anschliessend granuliert. Das so erhaltene Granulat wird bei 280-285°C nach dem Schmelzspinnverfahren versponnen. Die so gefärbten Fasern weisen eine sehr gute Lichtbeständigkeit und ausgezeichnete textile Echtheiten, wie Reib- und Nassechtheiten gegenüber Wasch- und Lösungsmitteln, auf.

Die Hitzebeständigkeit des Pigmentes während des Spinnprozesses bei 285°C ist ausgezeichnet.

Beispiel 13: 100 g Polyamid ®GRILON A 25 (EMS-Chemie AG, Zürich) und 0,2 g des nach Beispiel 1 erhaltenen Disazokondensationspigmentes werden auf einem Laborturbulamischer (W.A. Bachofen, Basel) während 20 Minuten gut vermischt. Danach wird die Mischung auf einem Einwellenextruder bei 240°C extrudiert. Das so erhaltene Band weist eine grüngelbe Färbung auf und zeigt gute Lichtbeständigkeiten.

Beispiel 14: Verfährt man analog wie in Beispiel 10 beschrieben, verwendet aber neben dem Buntpigment 10 g Titandioxid ®KRONOS RN-57-P (KRONOS Titan GmbH), so erhält man grüngelbe Pressplatten mit ebensoguten Hitzebeständigkeiten. Die zwischen 200 und 280°C gespritzten Pressplatten weisen nach dem Erkalten keine Farbabweichungen auf.

## Patentansprüche

1. Verbindungen der Formel I 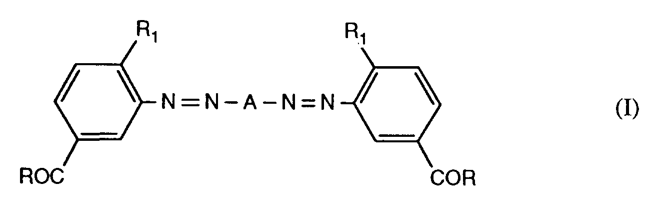 worin A für einen Rest der Formel II 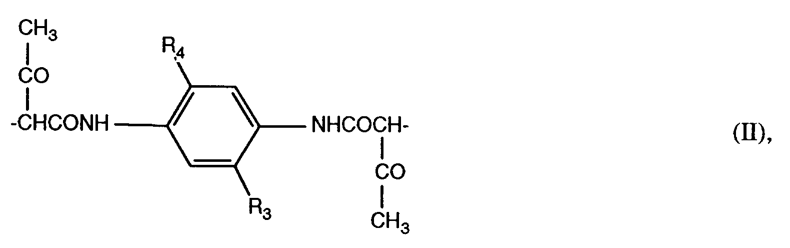 steht, worin R für einen Rest der Formel -NHR₂ steht, und
R₁ -H, -Cl, -CH₃, -OCH₃, -OC₂H₅, -COOCH₃, -COOC₂H₅ oder -OC₆H₅,
R₂ C₅-C₆-Cycloalkyl, und
R₃ und R₄ unabhängig voneinander -H, -Cl, -CH₃, -OCH₃ oder -OC₂H₅ bedeuten.

2. Gefärbtes hochmolekulares organisches Material enthaltend als Färbemittel eine Verbindung der Formel I gemäss Anspruch 1.

3. Gefärbtes organisches Material gemäss Anspruch 2, dadurch gekennzeichnet, dass es sich um ein Polyolefin handelt.

## Claims

1. A compound of formula I 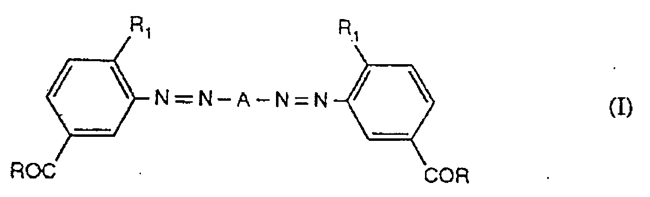 wherein A is a radical of formula II 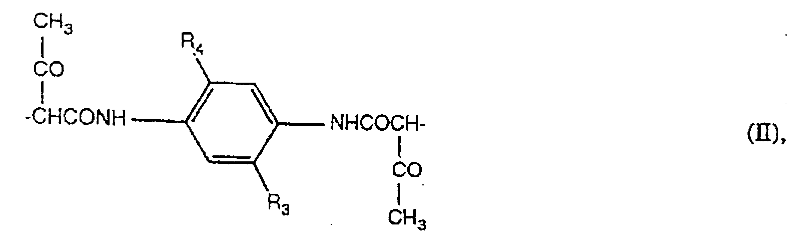 wherein R is a radical of formula -NHR₂, and
R₁ is -H, -Cl, -CH₃, -OCH₃, -OC₂H₅, -COOCH₃, -COOC₂H₅ or -OC₆H₅,
R₂ is C₅-C₆cycloalkyl, and R₃ and R₄ are each independently of the other -H, -Cl, -CH₃, -OCH₃ or -OC₂H₅.

2. A coloured high molecular weight organic material comprising as colorant a compound of formula I according to claim 1.

3. A coloured organic material according to claim 2, which is a polyolefin.

## Revendications

1. Composés de formule I 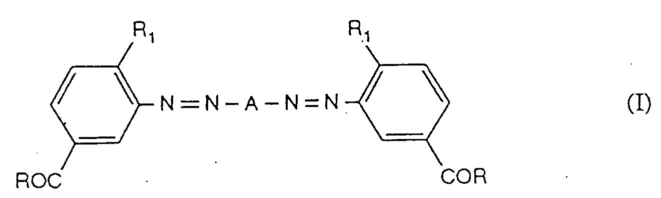 dans laquelle A représente un radical de formule II 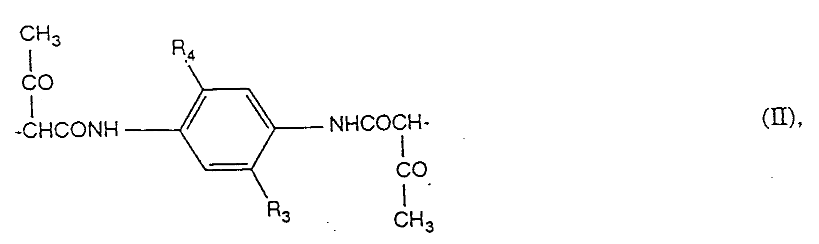 dans laquelle R représente un radical -NHR₂ et
R₁ signifie -H, -Cl, -CH₃, -OCH₃, -OC₂H₅, -COOCH₃, -COOC₂H₅ ou -OC₆H₅,
R₂ étant un cycloalkyle en C₅ ou C₆ et
R₃ et R₄, indépendamment l'un de l'autre, -H, -Cl, -CH₃, - OCH₃ ou -OC₂H₅.

2. Matières organiques à poids moléculaire élevé colorées qui contiennent comme colorant un composé de formule I selon la revendication 1.

3. Matière organique colorée selon la revendication 2 caractérisée en ce qu'il s'agit d'une polyoléfine.
